# EUROPÄISCHE PATENTSCHRIFT

(11) **EP 1 930 639 B1**
(45) Veröffentlichungstag und Bekanntmachung des Hinweises auf die Patenterteilung: **25.02.2009**
(21) Anmeldenummer: 06125420.7
(22) Anmeldetag: 05.12.2006
(51) Int. Cl.: F16L 5/08, H02G 3/22

(54) **Pressdichtung**
Compressible seal
Joint d'étanchéité compressible

(43) Veröffentlichungstag der Anmeldung: 11.06.2008
(73) Patentinhaber: Hauff-Technik GmbH & Co. KG, 89542 Herbrechtingen (DE)
(72) Erfinder: Esswein, Thomas, 89551 Königsbronn (DE)
(74) Vertreter: Szynka, Dirk

(56) Entgegenhaltungen:
- EP-A- 1 164 677
- EP-A1- 1 211 450
- WO-A-03/025446
- WO-A-03/058107
- DE-C- 581 247
- DE-U1- 8 707 566
- DE-U1- 9 208 255
- FR-A1- 2 590 347

## Beschreibung

Die Erfindung bezieht sich auf eine Pressdichtung zum Abdichten einer Leitungsdurchführung durch eine Wand.

Wenn eine Leitung durch eine Wand hindurch geführt werden muss, können spezielle Abdichtungsprobleme entstehen. Dies betrifft vor allem, aber nicht ausschließlich, den Gebäudebau, bei dem beispielsweise Versorgungsleitungen von außen in ein Gebäude eingeführt werden müssen, etwa in dessen Keller. Bei den Leitungen kann es sich um Fluidleitungen, etwa für Wasser, Gas oder Öl, oder auch um elektrische Versorgungs- oder Signalleitungen oder auch um optische Leitungen, etwa Glasfaserleitungen, handeln. In vielen Fällen werden auch mehrere Leitungen mit einer gemeinsamen Durchführung durch eine Wand geführt.

Beim Gebäudebau geht es dabei maßgeblich um die Dichtheit gegen äußeres Wasser, aber auch gegen möglicherweise von innen anstehende Fluide, etwa ausgelaufenes Heizöl. Bei anderen Anwendungen kann es jedoch auch zu abweichenden Dichtheitsanforderungen kommen, beispielsweise gegen den Durchtritt von explosiven oder toxischen Gasen.

Es ist grundsätzlich bekannt, für solche Zwecke Pressdichtungen mit einer Spanneinrichtung und einem Füllkörper aus elastisch verformbarem Material vorzusehen. Die Spanneinrichtung dient zum Verpressen des Füllkörpers in einer Richtung, um durch die resultierende Verformung und Spannung in dem Füllkörper eine dichtende Anlage senkrecht zu der Richtung der Verpressung zu erzeugen und mit Kraft zu beaufschlagen. Je nach individueller Ausgestaltung geht es dabei um eine dichtende Anlage von in mehreren oder allen zu der Richtung der Verpressung senkrechten Richtungen orientierten Flächen.

Der elastische Körper kann durchaus aus teilelastischem Material bestehen. Wesentlich ist nur, dass er die in der erwähnten Richtung anliegende Pressspannung in eine in der/den dazu senkrechten Richtung(en) wirkende Kraft "übersetzen" kann. In der Regel handelt es sich hier um gummielastische Massen.

Die Spanneinrichtung weist eine für die Pressfunktion wirksame Kontaktfläche zu dem Füllkörper auf, die hier als Andruckfläche bezeichnet wird. Ferner wird die Fläche des Füllkörper, aus der die Leitungen ein- bzw. austreten als Belegungsfläche bezeichnet. Im Regelfall sind die Andruckfläche und die Belegungsfläche im Wesentlichen an derselben Gesamtstirnfläche des Füllkörpers angeordnet und laufen die Leitungen zumindest näherungsweise in der Richtung der Verpressung durch den Füllkörper hindurch.

Die DE 87 07 566 U1 zeigt eine Pressdichtung mit einer die durchzuführende Leitung aufnehmenden Bohrung, deren Innenradius mit geringem Aufwand stufenweise an den Außenradius der durchzuführenden Leitung angepasst werden kann. Die Erfindung beruht auf axialen konzentrischen Einschnitten entlang eines wesentlichen Teils der axialen Länge des unverpressten Füllkörpers.

Die DE 581 247 C zeigt eine demselben Prinzip wie DE 87 07 566 U1 folgende Stopfdichtung. Auch hier sind durch die vorhergehend im Wesentlichen beschriebenen Einschnitte Ringe definiert, die eine stufenweise Vergrößerung des Innenradius durch Herausreißen der Ringe ermöglichen.

Die FR 2 590 347 A1 zeigt eine Pressdichtung wie in DE 87 07 566 U1 mit vergrößerbarem Innenradius, wobei auch hier der Außenradius des Füllkörpers durch Herausreißen von durch tiefgehenden Einschnitten definierten Ringen stufenweise verkleinert werden kann.

Die EP 1 211 450 A1 zeigt eine Vorrichtung in Pressdichtungen mit einer oder mehreren Leitungsdurchführungen und sonstigen Presseinheiten, welche die Größe der axial auf den Füllkörper einwirkenden Kraft mittels AufKlaffen eines Einschnitts im Füllkörper visualisiert.

Die WO 03/025446 A zeigt wieder eine Pressdichtung wie in DE 87 07 566 U1, deren Außen- und Innenradius durch abziehbare, nicht durchgehend mit dem Füllkörper verbundene Materiallagen verkleiner- bzw. vergrößerbar ist.

Die DE 92 08 255 U1 hat ein vereinfachtes Montieren und Austauschen von bereits montierten Pressdichtungen zum Ziel. Die Erfindung beruht auf der Teilung des Füllkörpers in einen Innen- und einen Außenteil, wobei nur der Innenteil die Bohrungen für die durchzuführenden Leitungen aufweist. Zur einfacheren Handhabung des Innenteils im Falle mehrerer Leitungsdurchführungen sind die einzelnen Bohrungen anhand von den ganzen Füllkörper axial durchziehenden Schnitte miteinander verbunden.

Die WO 03/058107 A zeigt eine Pressdichtung mit einer besonders großvolumigen radialen Verdrängung des Füllkörpers. Dies wird durch eine spezielle Geometrie der jeweiligen Kontaktflächen von Spanneinrichtung und Füllkörper erreicht und hat im Bereich der Andruckflächen eine lokal erhöhte radiale Anpresskraft zur Folge.

Der Erfindung liegt das Problem zugrunde, eine verbesserte Pressdichtung des beschriebenen Typs und ein zugehöriges verbessertes Abdichtverfahren anzugeben.

Das Problem wird gelöst durch eine Pressdichtung zum Abdichten zumindest einer Leitungsdurchführung durch eine Wand mit einer Spanneinrichtung und einem Füllkörper aus elastisch verformbaren Material, der durch die Spanneinrichtung in einer Richtung verpresst werden kann, um senkrecht dazu eine dichtende Anlage zu erzeugen und mit Kraft zu beaufschlagen, wobei die Spanneinrichtung an einer Andruckfläche an dem Füllkörper anliegt und die Leitung aus dem Füllkörper durch eine Belegungsfläche austritt, und der Füllkörper zwischen der Belegungsfläche und der ihr zugewandten Andruckfläche einen Einschnitt aufweist, so dass die Belegungsfläche in unmittelbarer Nachbarschaft des Einschnitts (6) stärker nach außen vordringen kann und eine kissenartige Ballung und Aufwölbung der Belegungsfläche verringert wird, wobei die Tiefe des Einschnitts in der Richtung der Leitung höchstens 50 % der Gesamterstreckung des Füllkörpers in Leitungsrichtung beträgt, sowie durch ein entsprechendes Verfahren zum Abdichten unter Verwendung einer solchen Pressdichtung.

Bevorzugte Ausgestaltungen sind in den abhängigen Ansprüchen angegeben und werden im Folgenden näher erläutert. Die einzelnen Merkmale sind dabei, auch bei der Beschreibung des Ausführungsbeispiels, im Hinblick auf die Vorrichtungskategorie und die Verfahrenskategorie der Erfindung zu verstehen, wobei nicht mehr explizit hierzwischen unterschieden wird.

Die Grundidee der Erfindung besteht in einem Einschnitt zwischen der Andruckfläche und der Belegungsfläche, insbesondere einem ringförmigen Einschnitt. Beim Verpressen des Füllkörpers mit Hilfe der Spanneinrichtung kommt es naturgemäß nicht nur zu einer Kraftbeaufschlagung in den zu der Verpressrichtung senkrechten Richtungen. Vielmehr werden auch die nicht von Leitungen eingenommenen Teile der Belegungsfläche von den Spannungs- und Formänderungen in dem Füllkörper mit beeinflusst. Die freien oder verformbar abgedeckten Oberflächen des Körpers treten bei konventionellen Pressdichtungen kissenartig nach außen. Infolge der gleichzeitigen Verpressung durch die Spanneinrichtung und die entsprechende Festlegung der Andruckfläche an den Füllkörper kommt es dabei ohne die vorliegende Erfindung zu einem ausgeprägten Aufwölben. Infolge dieser Ballung klaffen auch Kanten und Einschnitte in der Belegungsfläche auf. Dies gilt insbesondere für die Kanten der Belegungsfläche unmittelbar am Durchtritt der Leitung(en). Dadurch kann sich die wirksame Dichtfläche an der oder den Leitungen verkleinern und können sich einschnürende Effekte bei der Abdichtung ergeben.

Diese Einschnürung kann maximal zulässige Anpresskräfte im Inneren des Füllkörpers überschreiten und andererseits die Anpresskräfte weiter im Außenbereich des Füllkörpers verringern. Auch wenn die zulässigen Werte nicht überschritten oder unterschritten werden, werden die Anpresskräfte jedenfalls inhomogener und können damit weniger gut möglichst nah an einem Optimalwert gehalten werden.

Durch den Einschnitt in den Füllkörper zwischen der Andruckfläche und der Belegungsfläche kann die Oberfläche des Füllkörpers in unmittelbarer Nachbarschaft des Einschnittes stärker nach außen vordringen, ist also gewissermaßen besser von der Andruckfläche entkoppelt, wodurch sich die beschriebene kissenartige Ballung mit der Aufwölbung der Belegungsfläche deutlich verringert. Die Belegungsfläche bleibt gewissermaßen gerader oder verändert sich, allgemeiner gesprochen, weniger in ihrer Form. Das Aufklaffen der Füllkörperkanten unmittelbar an der oder den Leitungen wird ganz deutlich reduziert.

Der Einschnitt kann ein vorzugsweise im Wesentlichen vertikaler Schlitz sein. In Betracht kommen aber auch Einschnitte im Sinn von Ausnehmungen mit einer nicht verschwindenden Querschnittsfläche, beispielsweise V-förmige Ausnehmungen oder andere Formen. Der Begriff "Einschnitt" meint auch nicht, dass hier tatsächlich ein Schneidevorgang stattgefunden haben müsste, sondern steht für einen Spalt, Graben oder eine Ausnehmung im geometrischen Sinn.

Mit dem Einschnitt ist allerdings nur ein in der Tiefe begrenzter Schlitz, eine Ausnehmung oder dgl. gemeint und nicht etwa eine in Leitungsrichtung durch den gesamten Füllkörper durchgehende Grenze zwischen Füllkörperteilen. Die Bereiche des Füllkörpers an den beiden Seiten des Einschnitts sollen vielmehr dort, wo der Einschnitt in seiner Tiefe endet, zusammenhängen (Ober einen wesentlichen Teil, etwa mindestens 20 % oder 30 % der Länge des Füllkörpers in Leitungsrichtung). Allerdings kann unabhängig von dem Einschnitt an anderer Stelle durchaus eine Mehrteiligkeit des Füllkörpers vorgesehen sein. Eine aus möglichst wenigen Teilen aufgebaute Struktur lässt sich aber besonders rationell herstellen. Ferner ergibt sich gerade im Zusammenhang mit dem erfindungsgemäßen Einschnitt, dass hier durch einen durchgehenden Schlitz über die gesamte Länge des Füllkörpers in Leitungsrichtung und infolge dessen getrennte Teile die Gefahr des Verrutschens dieser beiden Teile relativ zueinander entsteht und die erfindungsgemäße Funktion eingeschränkt werden kann.

Die beschriebene Ballung des Füllkörpers ist auch davon abhängig, wie groß die Belegungsfläche im Verhältnis zu den Maßen des Füllkörpers insgesamt ist. Relativ große Belegungsflächen zeigen stärkeres Aufklaffen der Füllkörperkanten und ein ausgeprägteres kissenartiges Aufwölben. Andererseits sind große Belegungsflächen im Verhältnis zu der Größe der Andruckfläche bzw. im Verhältnis zu der in der Regel von Belegungsfläche und Andruckfläche insgesamt zumindest weitgehend gebildeten entsprechenden Stirnfläche des Füllkörpers erwünscht. Damit können vergleichsweise kompakt bauende Pressdichtungen realisiert werden bzw. große Leitungen oder eine Mehrzahl von Leitungen durch eine Pressdichtung hindurchgeführt werden.

Man kann die Erfindung also auch so auffassen, dass sie eine Vergrößerung der Belegungsfläche erlaubt, ohne dass die beschriebene Klaffwirkung Oberhand nimmt

Die Tiefe des erfindungsgemäßen Einschnitts soll höchstens 50 % der Gesamterstreckung des Füllkörpers in Leitungsrichtung betragen (wobei 40 %, 30 % bevorzugte Werte sind). Dabei bezieht sich die Erstreckung des Füllkörpers in Leitungsrichtung auf den unverpressten Zustand. Wenn, wie bevorzugt, an zwei entgegengesetzten Stirnseiten erfindungsgemäße Einschnitte vorgesehen sind, verteilen sich die 50 % (oder 40 % bzw. 30 %) auf beide, gelten also nicht doppelt.

Die Spanneinrichtung kann eine Metallplatte aufweisen, die den Andruck auf die Andruckfläche herstellt. Ferner kann sie in der Richtung des Anpressens verlaufende Spannschraubbolzen aufweisen, um die erforderlichen Kräfte erzeugen zu können.

Die Erfindung kann schon für eine einzige Stirnfläche einer Pressdichtung sinnvoll sein. Insbesondere kann es Pressdichtungen geben, bei denen eine entgegengesetzte Stirnfläche keine freie Belegungsfläche aufweist, sodass sich die Problematik des Aufwölbens dort nicht stellt. Vorzugsweise richtet sich die Erfindung jedoch auf Pressdichtungen mit zwei entgegengesetzten Stirnflächen, die jeweils eine Andruckfläche, eine Belegungsfläche und einen Einschnitt entsprechend den vorstehenden Erläuterungen aufweisen.

Eine bevorzugte Geometrie hat eine kreisrunde Querschnittsfläche der Pressdichtung senkrecht zu der Verpressrichtung. Dabei kann die Belegungsfläche vorzugsweise innerhalb der Andruckfläche liegen und besonders bevorzugterweise fast vollständig von dieser umgeben sein. Allerdings kann die Spanneinrichtung mehrteilig sein, etwa mehrteilige Metallplatten aufweisen, sodass sich in der Andruckfläche Zwischenräume ergeben. In diesem Sinne ist der Begriff "fast vollständig" zu verstehen.

Die erfindungsgemäße Wirkung tritt umso ausgeprägter in Erscheinung, je länger der Einschnitt ist. Vorzugsweise sollte er entlang dem größten Teil der Grenzlinie der Andruckfläche verlaufen, die der Belegungsfläche zugewandt ist, besonders bevorzugterweise entlang der gesamten Grenzlinie. Bei der zuvor geschilderten bevorzugten Geometrie mit kreisrunder Querschnittsform und einer die, etwa kreisscheibenförmige Belegungsfläche vollständig umgebenden, etwa kreisringförmigen, Andruckfläche, bedeutet dies beispielsweise einen nahezu oder ganz geschlossenen kreisförmigen Einschnitt im Randbereich der Belegungsfläche. Vorzugsweise verläuft der Einschnitt entlang zumindest 75 %, besonders bevorzugterweise zumindest 85 % und ganz bevorzugterweise zumindest 90 % oder sogar 95 % der Länge der genannten Grenzlinie.

Ferner läuft die Einschnittlinie in unmittelbarer Nachbarschaft zu der Andruckfläche, also praktisch direkt auf der genannten Grenzlinie. Quantitativ ausgedrückt sollte der Einschnitt vorzugsweise zumindest bei 80 %, vorzugsweise 90 %, besonders bevorzugterweise zumindest 95 % des von der Mitte eines kreisförmigen Querschnitts ausgehenden Radius bis zum inneren Rand der Andruckfläche liegen. Bei nicht kreisförmigen Geometrien können diese Angaben auf entsprechende gerade Bezugsrichtungen von der Mitte der Dichtung nach außen bezogen werden, und zwar jeweils lokal.

Das bereits erwähnte Verhältnis zwischen der Belegungsfläche und der Andruckfläche kann bei einer bevorzugten Ausgestaltung der Erfindung relativ groß gewählt werden, und zwar vorzugsweise bei mindestens 50 %, noch bevorzugterweise bei mindestens 60 %, 70 % und 80 %.

Es wurde bereits darauf hingewiesen, dass der Einschnitt auch eine gewisse Quer schnittsfläche aufweisen kann, also über einen reinen Schlitz hinausgehen kann. Damit hat der Einschnitt zwischen der Andruckfläche und der Belegungsfläche eine bestimmte flächige oder anders ausgedrückt radiale Erstreckung. Bevorzugt ist, dass die radiale Erstreckung des Einschnitts auf der Höhe der Andruckfläche und der unverformten Belegungsfläche bei höchstens 20 % (wobei 15 %, 10% und 5 % bevor zugtere Werte sind) des effektiven Belegungsflächenradius liegt, wobei hier der radiale Anteil des Einschnitts zu dem Radius der Belegungsfläche mitgerechnet wird.

Unabhängig davon oder zusätzlich ist es bevorzugt, wenn der radiale Anteil des Einschnitts höchstens 50 % (wobei 40 %, 30 % und 20 % bevorzugtere Werte sind) des nächsten Abstandes zwischen der Andruckfläche und der ihr nächsten Leitung beträgt, wobei auch hier wieder der Anteil des Einschnitts zu diesem Abstand zwischen Andruckfläche und Leitung hinzugerechnet werden soll. (Da die Erfindung nicht auf kreisförmige Geometrien eingeschränkt ist, ist der Begriff des Radius oder der radialen Erstreckung im Einzelfall lokal oder in Bezug auf den Abstand zu einer Mitte einer nichtrunden Geometrie zu verstehen.)

Wie schon erwähnt, dient die erfindungsgemäße Pressdichtung vorzugsweise zum Durchführen einer Mehrzahl Leitungen, auch unterschiedlichen Typs.

Zur Erleichterung der Montage kann der Füllkörper mehrteilig sein und einen Innenteil sowie einen Außenteil aufweisen, die beide an der Leitung bzw. den verschiedenen Leitungen anliegen. In anderen Worten wird die durchzuführende Leitung bzw. werden die Leitungen in der Grenzfläche zwischen Innenteil und Außenteil durchgeführt. Die notwendigen Bohrungen oder Ausnehmungen können in dem Innenteil, in dem Außenteil oder in beiden jeweils teilweise vorgesehen sein. Bei der Montage kann beispielsweise zunächst das Außenteil eingesetzt werden, können dann die Leitungen eingelegt werden, und wird dann danach erst das Innenteil eingeschoben (oder in anderer Reihenfolge). Bohrungen oder Ausnehmungen für Leitungen, die mit einer bestimmten Pressdichtung durchführbar sind, in einem aktuellen Anwendungsfall aber gerade nicht verwendet werden, können beispielsweise mit Strängen aus dem gleichen Material wie der Füllkörper ausgefüllt werden, die in gleicher Weise wie die durchzuführende(n) Leitung(en) eingelegt werden.

Im Folgenden wird ein Ausführungsbeispiel näher erläutert, wobei die einzelnen Merkmale auch in anderen Kombinationen erfindungswesentlich sein können und sich, wie oben bereits erwähnt, sowohl auf die Vorrichtungskategorie als auch auf die Verfahrenskategorie beziehen.
- Figur 1: zeigt eine Pressdichtung nach dem Stand der Technik im unverpressten Zustand im Axialschnitt.
- Figur 2: zeigt die Pressdichtung aus Figur 1 im verpressten Zustand im Axialschnitt.
- Figur 3: zeigt eine erfindungsgemäße Pressdichtung im Übrigen analog zu Figur 2.

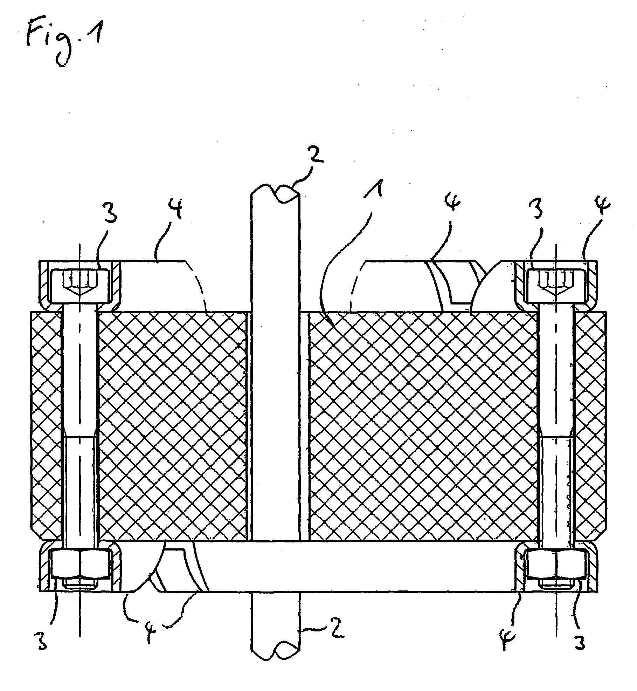

Figur 1 zeigt einen axialen Schnitt durch eine konventionelle Pressdichtung. "Axial" bezieht sich dabei auf eine vertikal in der Zeichenebene liegende Symmetrieachse eines im Wesentlichen zylinderförmigen Füllkörpers 1. Axial verläuft ferner eine symbolisch dargestellte Leitung 2, die tatsächlich nur eine von mehreren den Füllkörper 1 durchdringenden Leitungen ist.

Im Randbereich des Füllkörpers 1 sind Spannschraubbolzen 3 dargestellt, die entlang dem Umfang des Füllkörpers 1 verteilt in größerer Zahl, etwa zu viert oder zu sechst, vorgesehen sind. Sie durchsetzen nicht nur axiale Bohrungen in dem Füllkörper 1, sondern auch auf den Stirnflächen (in Figur 1 nach oben und nach unten gerichtet) aufliegende Metallplatten 4, die gemeinsam mit den Spannschraubbolzen 3 eine Spanneinrichtung bilden. Die Metallplatten 4 bilden dabei auf den Stirnflächen des Füllkörpers 1 segmentartige Ringabschnitte, beispielsweise jeweils paarweise mit knapp 180° Segmentanteil jeder Metallplatte 4. Dabei zeigt Figur 1 die oberen Metallplatten 4 jeweils links und rechts außen im Schnitt und im Übrigen z. T. in einer radialen Seitenansicht, die aber im Bereich um die Leitung 2 herum unterbrochen ist, weil dort die Leitung 2 und der sie umgebende Füllkörper 1 im axialen Schnitt dargestellt sind. Die unteren Metallplatten 4 sind insgesamt zwischen den links außen und rechts außen liegenden Axialschnittansichten in Seitenansicht gezeigt, weswegen die Leitung 2 hier nicht durchläuft. Der nach unten darüber hinaus ragende Teil der Leitung 2 ist wieder dargestellt, obwohl er in radialer Richtung vor der dargestellten (in Blickrichtung hinteren) Metallplatte 4 liegt.

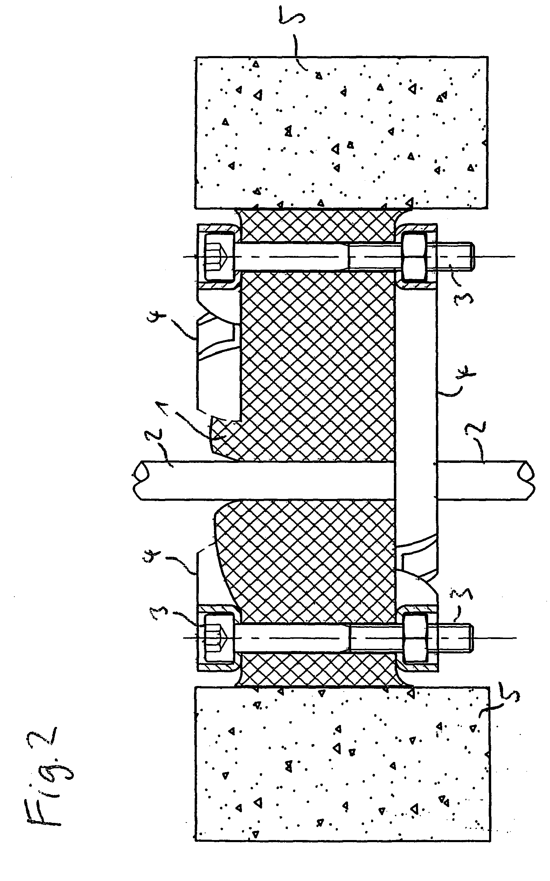

Figur 2 zeigt die Pressdichtung aus Figur 1 in einen offenen Ringraum einer nur symbolisch angedeuteten Mauer 5 eingebaut. Man spricht hier auch von einer Ringraumdichtung, einer bevorzugten Anwendung der Erfindung.

Durch Anziehen der Spannschraubbolzen 3 sind die Metallplatten 4 axial aufeinander zu bewegt worden und haben damit im Bereich ihrer Kontaktfläche mit dem Füllkörper 1, der in Figur 2 durch ihre im Wesentlichen gerade Form erkennbaren Andruckfläche, den Füllkörper 1 axial komprimiert. Man erkennt im Vergleich zu Figur 1 deutlich, dass durch diese Kompression die Bohrung oder die Durchtrittsöffnung für die Leitung 2 radial auf die Leitung 2 gepresst wurde und dass der Füllkörper 1 ferner radial über die äußeren Ränder der Metallplatten 4 nach außen vorgetreten ist und dort einen dichtenden Andruck an die Innenmantelfläche der Mauer 5 erzeugt.

Der Füllkörper 1 weicht ferner kissenartig dort nach außen aus, wo er durch die Metallplatten 4 freigegeben ist, in diesem Fall radial innerhalb der Metallplatten 4 im Bereich der für Leitungen wie die Leitung 2 zur Verfügung stehenden Belegungsfläche. Die Belegungsfläche wölbt sich daher, wie in Figur 2 bei der oberen Stirnfläche erkennbar, kissenartig nach außen auf, so dass die Bohrungen oder Durchtrittsöffnungen für Leitungen wie die Leitung 2 deutlich aufklaffen. Die dadurch entstehenden Probleme wurden bereits eingangs geschildert. Figur 2 zeigt hierbei bei der oberen Stirnfläche links die kissenartige Aufwölbung und das Aufklaffen um die Leitung 2 herum, wobei diese aufwölbenden Formen des Füllkörpers 1 die in Blickrichtung dahinter liegende Seitenansicht der Metallplatte 4 teilweise verdecken. Im rechten oberen Bereich ist stattdessen die Seitenansicht auf die Metallplatte 4 wiedergegeben. Man kann sich gewissermaßen vorstellen, dass der Schnitt hier entlang der inneren Kante der Metallplatte 4 läuft. So erklärt sich auch, dass bei der unteren Stirnfläche keine (tatsächlich aber vorhandene) Aufwölbung des Füllkörpers 1 zu sehen ist.

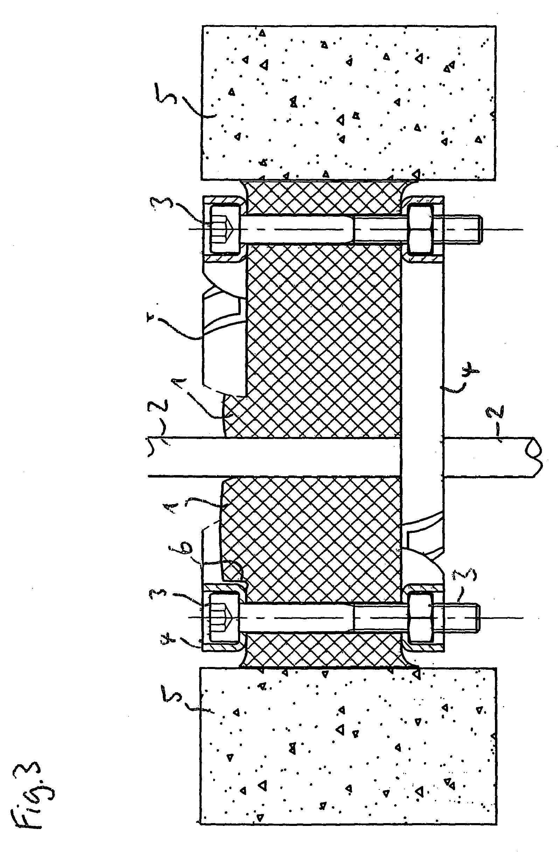

Figur 3 zeigt demgegenüber eine erfindungsgemäße Pressdichtung. Die Darstellung entspricht weitgehend Figur 2, wobei die übereinstimmenden Merkmale nicht erneut beschrieben werden und die Bezugsziffern analog zugeordnet sind. Im Unterschied zu Figur 2 zeigt der Füllkörper hier einen kreisförmig am Innenrand der Metallplatten 4 geschlossen umlaufenden Einschnitt 6. Es handelt sich hierbei im unverpressten Zustand (nicht dargestellt) um einen etwa 5 mm (bei einer axialen Länge des Füllkörpers 1 im unverpressten Zustand von etwa 40 mm) tiefen Einschnitt im Wesentlichen ohne Querschnittsfläche (in der Blickrichtung der Figur 3). Figur 3 zeigt diesen Einschnitt 6 bereits in seiner Funktion, nämlich in einem so weit aufgeklafften Zustand, dass seine in Figur 3 linke Flanke im Anschluss an die Metallplatte 4 praktisch nicht mehr sichtbar ist, sondern durch die axiale Einwärtsbewegung der Metallplatte 4 weggedrückt wurde. Stattdessen klafft die rechte Flanke des Einschnitts 6 steil nach oben auf und ermöglicht damit aber eine weitgehend unverkrümmte Oberflächenform des Füllkörpers 1 zwischen der Metallplatte 4, also der Spanneinrichtung und der Andruckfläche, und der Leitung 2. Dementsprechend geringer ist die Aufklaffung des Füllkörpers 1 in der unmittelbaren Umgebung der Leitung 2.

Dies gilt für einen geschlossenen Kreis innerhalb der Metallplatten 4 sowohl auf der oberen als auch auf der unteren Seite des Füllkörpers 1, also an beiden Stirnflächen. Der Einschnitt 6 ist allerdings aus den bereits in Bezug auf Figur 2 erläuterten Gründen nur links oben zu erkennen. Er kommt im Übrigen auch den weiteren, hier nicht dargestellten Leitungen durch den Füllkörper 1 zu Gute.

Figur 3 ist wie die Figuren 1 und 2 im Wesentlichen maßstäblich und zeigt, dass die Tiefe des Einschnitts 6 (doppelt gerechnet) nur etwa ein Viertel der axialen Erstreckung des Füllkörpers 1 ausmacht und ferner die (radiale) Breite des Einschnitts 6, die hier fast verschwindet, sowohl in Bezug auf den Radius des Füllkörpers 1 bis zur Innenkante der Andruckfläche bzw. der Metallplatten 4 als auch in Bezug auf den Abstand zwischen letzterer und der Leitung 2 nicht ins Gewicht fällt. Man kann sich leicht vorstellen, dass auch radial etwas breitere Einschnitte 6, etwa eine V-Form mit einer Breite von beispielsweise 3 mm, hier eine analoge Funktion ausüben könnten, zu breite Einschnitte allerdings die letztlich verfügbare weitgehend unverformte Stirnfläche im Bereich der Belegungsfläche einschränken würden.

Man kann ferner leicht erkennen, dass die Andruckfläche in diesem Beispiel zwar die Belegungsfläche umgibt, analoge Wirkungen aber auch auftreten würden, wenn es außerhalb der Andruckfläche eine weitere Belegungsfläche gäbe oder wenn die Andruckfläche zentral säße und die Belegungsfläche außerhalb angeordnet wäre und entsprechende Einschnitte zwischen diesen Flächen vorgesehen wären.

Im Übrigen ist der Füllkörper 1 zweiteilig, was die Figuren 1 - 3 nicht darstellen. Die Leitungen sitzen, wie die Leitung 2, auf einem gemeinsamen Radius. Ein innerer Teil des Füllkörpers innerhalb des Radius kann von einem äußeren Teil außerhalb des Radius getrennt werden, um das Einführen der Leitungen 2 zu erleichtern. Die Grenze zwischen den beiden Füllkörperteilen verläuft dabei aber nicht im Bereich des Einschnitts 6.

Der erfindungsgemäße Füllkörper 1 lässt sich beispielsweise durch Gießen und Vulkanisierung herstellen. Die Gussform kann so beschaffen sein, dass der Einschnitt 6 bzw. die beiden Einschnitte 6 bereits beim Gießen entstehen, was sich für Standardserien anbietet. Die Erfindung kann allerdings auch vorteilhaft dadurch angewendet werden, dass an sich ohne Einschnitte 6 gegossene Füllkörper 1 in kleineren Serien für bestimmte Anwendungen durch einen nachfolgenden Schnitt, etwa mit einem Hülsenbohrer, eingeschnitten werden.

## Patentansprüche

1. Pressdichtung zum Abdichten zumindest einer Leitungsdurchführung (2) durch eine Wand (5) mit
einer Spanneinrichtung (3, 4)
und einem Füllkörper (1) aus elastisch verformbarem Material,
der durch die Spanneinrichtung (3, 4) in einer Richtung verpresst werden kann, um senkrecht dazu eine dichtende Anlage zu erzeugen und mit Kraft zu beaufschlagen,
wobei die Spanneinrichtung (3, 4) an einer Andruckfläche an dem Füllkörper (1) anliegt
und die Leitung (2) aus dem Füllkörper (1) durch eine Belegungsfläche austritt,
und der Füllkörper (1) zwischen der Belegungsfläche und der ihr zugewandten Andruckfläche einen Einschnitt (6) aufweist, so dass die Belegungsfläche in unmittelbarer Nachbarschaft des Einschnitts (6) stärker nach außen vordringen kann und eine kissenartige Ballung und Aufwölbung der Belegungsfläche verringert wird,
wobei die Tiefe des Einschnitts (6) in der Richtung der Leitung (2) höchstens 50 % der Gesamterstreckung des Füllkörpers in Leitungsrichtung beträgt.

2. Pressdichtung nach Anspruch 1, bei der die Spanneinrichtung (3, 4) eine an der Andruckfläche anliegende Metallplatte (4) aufweist.

3. Pressdichtung nach Anspruch 2, bei der die Spanneinrichtung (3, 4) in der Richtung der Verpressung verlaufende Spannschraubbolzen (3) aufweist, die die Metallplatte (4) mit Kraft beaufschlagen können .

4. Pressdichtung nach einem der vorstehenden Ansprüche, bei der in der Richtung der Verpressung beidseits an den Außenflächen des Füllkörper (1) jeweils eine Andruckfläche, eine Belegungsfläche und ein Einschnitt (6) dazwischen vorgesehen sind.

5. Pressdichtung nach einem der vorstehenden Ansprüche, die senkrecht zu der Richtung der Verpressung einen im Wesentlichen kreisrunden Querschnitt aufweist.

6. Pressdichtung nach einem der vorstehenden Ansprüche, bei der die Andruckfläche die Belegungsfläche im Wesentlichen umgibt.

7. Pressdichtung nach einem der vorstehenden Ansprüche, bei der der Einschnitt (6) entlang dem größten Teil der der Belegungsfläche zugewandten Grenzlinie der Andruckfläche verläuft.

8. Pressdichtung nach einem der vorstehenden Ansprüche, bei der der Einschnitt (6) in direkter Nähe zu der Andruckfläche verläuft.

9. Pressdichtung nach einem der vorstehenden Ansprüche, bei der das quantitative Verhältnis zwischen der Belegungsfläche und der Andruckfläche zumindest 50 % beträgt.

10. Pressdichtung nach einem der vorstehenden Ansprüche, bei der die Erstreckung des Einschnitts (6) quer zu der Richtung der Leitung (2) auf der Höhe der Andruckfläche und der unverformten Belegungsfläche bei höchstens 20 %, bevorzugter höchstens 15 %, 10% bzw. 5 % der effektiven Erstreckung der Belegungsfläche liegt.

11. Pressdichtung nach einem der vorstehenden Ansprüche, bei der der Anteil des Einschnitts (6) höchstens 50 %, bevorzugter 40 %. 30 % bzw. 20 % des nächsten Abstandes zwischen der Andruckfläche und der ihr nächsten Leitung (2) beträgt.

12. Pressdichtung nach einem der vorstehenden Ansprüche, die für eine Mehrzahl Leitungen (2) ausgelegt ist, die durch dieselbe(n) Belegungsfläche(n) hindurchtreten.

13. Pressdichtung nach einem der vorstehenden Ansprüche, bei der der Füllkörper (1) einen Innenteil und einen Außenteil aufweist und die Leitung(en) an beiden anliegen.

14. Verfahren zum Abdichten einer Leitungsdurchführung (2) durch eine Wand (5) mit einer Pressdichtung, die versehen ist mit
einer Spanneinrichtung (3, 4)
und einem Füllkörper (1) aus elastisch verformbarem Material, der durch die Spanneinrichtung (3, 4) in einer Richtung verpresst wird,
sodass senkrecht dazu eine dichtende Anlage erzeugt und mit Kraft beaufschlagt wird,
wobei die Spanneinrichtung (3, 4) an einer Andruckfläche an dem Füllkörper (1) anliegt
und die Leitung (2) aus dem Füllkörper (1) durch eine Belegungsfläche austritt, und der Füllkörper (1) zwischen der Belegungsfläche und der ihr zugewandten Andruckfläche einen Einschnitt (6) in der Richtung der Leitung (2) aufweist, so dass die Belegungsfläche in unmittelbarer Nachbarschaft des Einschnitts (6) stärker nach außen vordringen kann und eine kissenartige Ballung und Aufwölbung der Belegungsfläche verringert wird,
wobei die Tiefe des Einschnitts (6) in der Richtung der Leitung (2) höchstens 50 % der Gesamterstreckung des Füllkörpers in Leitungsrichtung beträgt.

15. Verfahren nach Anspruch 14 unter Verwendung einer Pressdichtung nach einem der Ansprüche 2 - 13.

## Claims

1. A pressing seal for sealing at least one conduit duct (2) through a wall (5), comprising
a tensioning device (3, 4)
and a filling body (1) made of elastically deformable material,
which filling body (1) can be pressed in one direction by said tensioning device (3,4) to build up a sealing contact perpendicularly thereto and to produce a force on said contact,
wherein said tensioning device (3, 4) contacts a press surface of said filling body (1)
and the conduit (2) exits out of said filling body (1) through an occupation surface,
and said filling body (1) comprises a cut (6) between said occupation surface and said press surface being directed thereto, so that said occupation surface can stronger raise outwardly adjacent to said cut (6) and a pillow-like deformation and bulging of said occupation surface are reduced,
wherein the depth of said cut (6) in the direction of said conduit (2) is at most 50 % of said filling body's total dimension in said conduit direction.

2. A pressing seal according to claim 1, wherein said tensioning device (3, 4) comprises a metal plate (4) contacting said press surface.

3. A pressing seal according to claim 2, wherein said tensioning device (3, 4) comprises tensioning bolts (3) extending along said pressing direction for producing a force onto said metal plate (4).

4. A pressing seal according to one of the previous claims, wherein said filling body's (1) outer surfaces on both sides in said pressing direction each comprise a press surface, an occupation surface and a cut (6) there between.

5. A pressing seal according to one of the previous claims that comprises an essentially circular cross-section perpendicularly to said pressing direction.

6. A pressing seal according to one of the previous claims, wherein said press surface essentially surrounds said occupation surface.

7. A pressing seal according to one of the previous claims, wherein said cut (6) runs along the dominant part of said press surface's boundary line facing said occupation surface.

8. A pressing seal according to one of the previous claims, wherein said cut (6) runs adjacent to said press surface.

9. A pressing seal according to one of the previous claims, wherein the quantitative ratio of said occupation surface to said press surface is at least 50 %.

10. A pressing seal according to one of the previous claims, wherein said cut's (6) dimension transverse to said direction of said conduit (2) at the level of said press surface and said non-deformed occupation surface is at the most 20 %, preferably at the most 15 %, 10 % or rather 5 % of said occupation surface's effective dimension.

11. A pressing seal according to one of the previous claims, wherein said cuts (6) ratio is at the most 50 %, preferably 40 %, 30 % or rather 20 % of the nearest distance between said press surface and the conduit (2) nearest thereto.

12. A pressing seal according to one of the previous claims designed for a plurality of conduits (2), penetrating through the same occupation surface(s).

13. A pressing seal according to one of the previous claims, wherein said filling body (1) comprises an inner part and an outer part, said conduit(s) contacting both of them.

14. A method for sealing a conduit duct (2) through a wall (5) with a pressing seal comprising
a tensioning device (3, 4)
and a filling body (1) made of elastically deformable material,
which filling body (1) is pressed in one direction by said tensioning device (3, 4), so that a sealing contact is built up perpendicularly thereto and a force is produced on said contact,
wherein said tensioning device (3, 4) contacts a press surface of said filling body (1)
and the conduit (2) exits out of said filling body (1) through an occupation surface,
and said filling body (1) comprises a cut (6) in the direction of said conduit (2) between said occupation surface and said press surface being directed thereto, so that said occupation surface can stronger raise outwardly adjacent to said cut (6) and a pillow-like deformation and bulging of said occupation surface are reduced,
wherein the depth of said cut (6) in the direction of said conduit (2) is at most 50 % of said filling body's total dimension in said conduit direction.

15. A method according to claim 14 making use of a pressing seal according to one of claims 2 -13.

## Revendications

1. Joint d'étanchéité compressible pour étanchéifier au moins un passage de conduite (2) dans une paroi (5), comportant
un dispositif de serrage (3, 4)
et un corps de remplissage (1) réalisé dans un matériau élastiquement déformable,
qui est susceptible d'être compressé dans une certaine direction par le dispositif de serrage (3, 4) afin de produire perpendiculairement à celle-ci un agencement étanche et d'y exercer une force,
le dispositif de serrage (3, 4) reposant contre une surface de pression sur le corps de remplissage (1)
et la conduite (2) sortant du corps de remplissage (1) en traversant une surface d'occupation,
et le corps de remplissage (1) présentant une entaille (6) entre la surface d'occupation et la surface de pression à côté, de sorte à favoriser une avancée plus forte de la surface d'occupation vers l'extérieur à proximité directe de l'entaille (6) et à réduire la formation d'un bombement et d'un gonflement rebondi de la surface d'occupation,
l'entaille (6), dans le sens de la conduite (2), ayant une profondeur d'au maximum 50 % de l'étendue totale du corps de remplissage dans le sens de la conduite.

2. Joint d'étanchéité compressible selon la revendication 1, dans lequel le dispositif de serrage (3, 4) présente une plaque métallique (4) en contact avec la surface de pression.

3. Joint d'étanchéité compressible selon la revendication 2, dans lequel le dispositif de serrage (3, 4) présente des boulons de serrage (3) dirigés dans le sens de la compression et susceptibles de soumettre la plaque métallique (4) à une force.

4. Joint d'étanchéité compressible selon l'une quelconque des revendications précédentes, dans lequel il est prévu dans le sens de la compression, de part et d'autre des surfaces extérieures du corps de remplissage (1), une surface de pression, une surface d'occupation et une entaille (6) réalisée entre celles-ci.

5. Joint d'étanchéité compressible selon l'une quelconque des revendications précédentes, qui présente, perpendiculairement au sens de la compression, une section transversale sensiblement circulaire.

6. Joint d'étanchéité compressible selon l'une quelconque des revendications précédentes, dans lequel la surface de pression entoure sensiblement la surface d'occupation.

7. Joint d'étanchéité compressible selon l'une quelconque des revendications précédentes, dans lequel l'entaille (6) se prolonge sur la majeure partie de la ligne de démarcation de la surface de pression qui est tournée vers la surface d'occupation.

8. Joint d'étanchéité compressible selon l'une quelconque des revendications précédentes, dans lequel l'entaille (6) se prolonge à proximité directe de la surface de pression.

9. Joint d'étanchéité compressible selon l'une quelconque des revendications précédentes, dans lequel le rapport quantitatif entre la surface d'occupation et la surface de pression est d'au moins 50 %.

10. Joint d'étanchéité compressible selon l'une quelconque des revendications précédentes, dans lequel l'étendue de l'entaille (6) transversalement au sens de la conduite (2) sur la hauteur de la surface de pression et de la surface d'occupation non déformée est au plus de 20 %, plus préférablement au plus de 15 %, 10 % voire 5 % de l'étendue effective de la surface d'occupation.

11. Joint d'étanchéité compressible selon l'une quelconque des revendications précédentes, dans lequel l'entaille (6) représente une proportion d'au maximum 50 %, de préférence 40 %, 30 % voire 20 % de l'écart le plus proche entre la surface de pression et la conduite (2) proche de celle-ci.

12. Joint d'étanchéité compressible selon l'une quelconque des revendications précédentes, conçu pour une pluralité de conduites (2) qui pénètrent dans la/les même(s) surface(s) d'occupation.

13. Joint d'étanchéité compressible selon l'une quelconque des revendications précédentes, dans lequel le corps de remplissage (1) présente une partie intérieure et une partie extérieure et la/les conduite(s) est/sont en contact avec ces deux parties.

14. Procédé pour étanchéifier un passage de conduite (2) dans une paroi (5) au moyen d'un joint d'étanchéité compressible qui est pourvu d'un dispositif de serrage (3, 4)
et d'un corps de remplissage (1) réalisé dans un matériau élastiquement déformable, qui est susceptible d'être compressé dans une certaine direction par le dispositif de serrage (3, 4) afin de produire perpendiculairement à celle-ci un agencement étanche et d'y exercer une force,
le dispositif de serrage (3, 4) reposant contre une surface de pression sur le corps de remplissage (1)
et la conduite (2) sortant du corps de remplissage (1) en traversant une surface d'occupation, et le corps de remplissage (1) présentant, dans le sens de la conduite (2), une entaille (6) entre la surface d'occupation et la surface de pression à côté, de sorte à favoriser une avancée plus forte de la surface d'occupation vers l'extérieur à proximité directe de l'entaille (6) et à réduire la formation d'un bombement et d'un gonflement rebondi de la surface d'occupation,
l'entaille (6), dans le sens de la conduite (2), ayant une profondeur d'au maximum 50 % de l'étendue totale du corps de remplissage dans le sens de la conduite.

15. Procède selon la revendication 14 mettant en oeuvre un joint d'étanchéité compressible selon l'une des revendications 2 à 13.
